# FASCICULE DE BREVET EUROPEEN

(11) **EP 3 653 879 B1**
(45) Date de publication et mention de la délivrance du brevet: **24.02.2021**
(21) Numéro de dépôt: 19209683.2
(22) Date de dépôt: 18.11.2019
(51) Int. Cl.: F04C 2/107, F04C 15/00

(54) **DISPOSITIF DE POMPAGE**
PUMPVORRICHTUNG
PUMPING DEVICE

(30) Priorité: 16.11.2018 FR 1860622
(43) Date de publication de la demande: 20.05.2020
(73) Titulaire: PCM Technologies, 92300 Levallois-Perret (FR)
(72) Inventeur: PENISSON, Eric, 44150 ANCENIS (FR); GROS, Dominique, 49000 ANGERS (FR); BOUTAULT, Cédric, 49250 SAINT MATHURIN SUR LOIRE (FR)
(74) Mandataire: Plasseraud IP

(56) Documents cités:
- EP-A1- 2 669 522
- DE-C1- 3 816 581
- FR-A1- 2 498 264

## Description

La présente invention se situe dans le domaine des dispositifs de pompage volumétrique généralement utilisés dans l'industrie alimentaire, cosmétique ou pharmaceutique etc. pour déplacer des liquides ou des produits particulièrement visqueux, abrasifs ou fragiles dans des tuyauteries.

Un dispositif de pompage comprend, de façon classique une pompe à cavités progressives, ou pompe Moineau, équipée d'un boîtier de réception d'un fluide pâteux ou liquide. Un tel dispositif de pompage est par exemple décrit dans la demande de brevet EP 1 650 403. La pompe à cavités progressives comporte une armature extérieure, un stator et un rotor hélicoïdal logé dans le stator. Le boîtier contient une ligne d'arbre intermédiaire (typiquement un cardan ou une bielle flexible) dont une extrémité est accouplée au rotor, et l'autre à un arbre de sortie d'un moteur d'entraînement ou « entraineur ». Le stator est monté serré entre le boîtier et une bride de connexion à une tuyauterie par exemple aux moyens de tirants. Le rotor est accouplé à l'arbre intermédiaire par exemple par trois vis pointeaux radiales vissés dans des trous taraudés de l'entraineur.

Le stator et le rotor sont des pièces d'usure qui doivent être changées régulièrement. Pour pouvoir extraire le stator ou le rotor, l'utilisateur doit actuellement d'abord dégager de l'espace dans la direction longitudinale de la pompe. A cet effet, il est nécessaire de désaccoupler le moteur pour extraire l'ensemble de la ligne d'arbre par l'arrière et avoir accès aux vis pointeaux qui maintiennent le rotor. Sur certains modèles de pompes, ces opérations peuvent se révéler longues et fastidieuses. Pour extraire le rotor, il faut d'abord démonter le stator.

Le document DE 38 16 581 C1 décrit une pompe à cavités progressives associée à un mécanisme de transmission correspondant au préambule de la revendication 1. Le but de la présente invention est de proposer un dispositif de pompage plus facile et plus rapide à démonter et à remonter. En particulier, le but de la présente invention est de proposer un dispositif de pompage comprenant un accouplement entre le rotor et le mécanisme de transmission qui puisse être facilement et rapidement démonté et aussi remonté.

A cet effet, la présente invention a pour objet un dispositif de pompage défini par rapport à un repère orthogonal direct comprenant une première direction, une deuxième direction et une troisième direction, le dispositif de pompage comportant :
- une pompe à cavités progressives comprenant un rotor hélicoïdal ayant un axe directeur parallèle à la deuxième direction ;
- un mécanisme de transmission fixé au rotor hélicoïdal, le mécanisme de transmission comprenant un organe de fixation parmi un organe mâle et un organe femelle, le rotor comprenant l'autre organe parmi l'organe mâle et l'organe femelle; l'organe femelle comportant un carter pourvu d'un évidement axial, l'évidement axial comportant au moins une paroi intérieure de coulissement s'étendant dans un plan contenant la deuxième direction; l'organe mâle comportant une embase et une saillie axiale ; caractérisé en ce que la saillie axiale comprend une première face et une deuxième face opposée à la première face ; ladite première face comporte une paroi d'appui proximale; ladite deuxième face comprenant une paroi extérieure de verrouillage inclinée d'un angle de verrouillage par rapport à la paroi d'appui proximale, ledit angle de verrouillage étant compris entre 5° et 90°; et en ce que l'évidement axial comprend au moins une paroi intérieure de verrouillage inclinée dudit angle de verrouillage par rapport à ladite au moins une paroi intérieure de coulissement, la paroi extérieure de verrouillage étant en butée contre la paroi intérieure de verrouillage, lorsque l'organe mâle est accouplé à l'organe femelle.

Avantageusement, le rotor peut être facilement fixé à ou, séparé de, du mécanisme de transmission par un simple mouvement de basculement du rotor par rapport au mécanisme de transmission. Ce montage permet de monter et de démonter le dispositif de pompage sans avoir à démonter la bride fixée à la tuyauterie. Ainsi, avantageusement, le remplacement des pièces d'usure de la pompe à cavités progressives est simplifié et accéléré.

Avantageusement, les parois de verrouillage de l'organe femelle et de l'organe mâle permettent de résister aux efforts axiaux selon la première direction. Avantageusement, cet accouplement permet de retirer simultanément le rotor et le stator en une seule opération.

Suivant des modes particuliers de réalisation, le dispositif de pompage comporte l'une ou plusieurs des caractéristiques suivantes :
- ledit angle de verrouillage est compris entre 5° et 60° et est, de préférence, compris entre 15° et 35°.
- La saillie axiale présente une section radiale de forme polygonale et, de préférence, rectangulaire.

Avantageusement, l'emploi d'une section polygonale permet de réaliser une solidarisation en rotation du mécanisme de transmission et du rotor.
- Le rotor comporte l'organe mâle.
- La saillie axiale comporte une embase ayant une paroi transversale de butée et dans lequel le carter est pourvu d'un bord transversal latéral, le bord transversal latéral formant un épaulement pour la paroi de butée de l'embase, lorsque l'organe mâle est accouplé à l'organe femelle.

Avantageusement, la paroi de butée de l'embase de l'organe femelle et la paroi transversale latérale de l'organe mâle permettent de résister aux efforts axiaux selon la deuxième direction.
- L'embase possède une paroi inclinée contiguë et alignée axialement à la paroi extérieure de verrouillage, ladite paroi inclinée présentant un angle de verrouillage par rapport au plan transversal pour autoriser le basculement d'un organe de fixation parmi l'organe mâle et l'organe femelle par rapport à l'autre organe de fixation.
- L'embase et le carter présentent une forme extérieure cylindrique, et le dispositif de pompage comporte en outre une bague de verrouillage propre à coulisser entre une position de verrouillage dans laquelle la bague de verrouillage est agencée sur au moins une partie de l'embase et sur au moins une partie du carter et une position de déverrouillage dans laquelle la bague de verrouillage est agencée uniquement autour du carter.

Avantageusement, la bague de verrouillage permet de verrouiller l'accouplement entre l'organe mâle et l'organe femelle.

Avantageusement également, la bague de verrouillage permet d'éviter une infiltration de liquide à l'intérieure du carter et de l'embase. L'accouplement reste graissé en permanence. Cela facilite le montage et le démontage des pièces et évite toute accumulation de produit pompé à l'intérieur du carter rendant cette connexion compatible avec des applications agroalimentaires.
- L'embase comporte une gorge et dans lequel l'organe mâle comporte au moins un joint d'étanchéité agencé dans ladite gorge, la bague de verrouillage étant disposée au-dessus du joint d'étanchéité, lorsque la bague de verrouillage est dans une position de verrouillage.

Le carter comporte une gorge et dans lequel le l'organe femelle comporte au moins un joint d'étanchéité agencé dans ladite gorge, la bague de verrouillage étant disposée au-dessus du joint d'étanchéité, lorsque la bague de verrouillage est dans une position de verrouillage.

L'embase comporte un trou radial et au moins un doigt d'indexage fixé dans ledit trou radial, et dans lequel une face interne de la bague de verrouillage comprend une rainure propre à réceptionner une extrémité du doigt d'indexage, lorsque la bague de verrouillage est positionnée dans une position de verrouillage.

Avantageusement, le doigt d'indexage permet de maintenir la bague de verrouillage en position de verrouillage.

La première face comporte une paroi de coulissement distale parallèle à la paroi extérieure de verrouillage, la paroi de coulissement distale étant opposée à une partie de la paroi extérieure de verrouillage.

La deuxième face de la saillie axiale comporte au moins une première paroi jouxtant l'embase, une deuxième paroi agencée dans le prolongement de la première paroi selon la deuxième direction, la première paroi étant parallèle à la paroi d'appui proximale, la deuxième paroi étant perpendiculaire à la première paroi, et dans lequel ladite paroi extérieure de verrouillage est disposée dans le prolongement de la deuxième paroi selon la deuxième direction.

La paroi extérieure de verrouillage présente une forme bombée et dans lequel ladite au moins une paroi intérieure de verrouillage présente une forme creuse adaptée pour recevoir ladite paroi extérieure de verrouillage.

L'évidement axial comporte quatre parois intérieures de coulissement disposées perpendiculairement les unes aux autres et quatre parois intérieures de verrouillage, chaque paroi intérieure de verrouillage étant disposée dans le prolongement d'une paroi intérieure de coulissement selon la deuxième direction.

La première face de la saillie axiale comporte un décrochement qui s'étend dans le prolongement la paroi d'appui proximale selon la deuxième direction, ledit décrochement étant ouvert sur une face d'extrémité de la saillie axiale.

L'embase comporte une paroi transversale disposée dans le prolongement de la deuxième face selon la deuxième direction Y; ladite paroi transversale étant en retrait par rapport à un plan contenant la paroi transversale de butée de manière à générer un dégagement entre ladite paroi transversale et le bord transversal latéral du carter lorsque l'organe maie est engagé dans l'organe femelle, ledit dégagement permettant le basculement d'un organe de fixation parmi l'organe mâle et l'organe femelle par rapport à l'autre organe de fixation.

La présente demande de brevet concerne également une pompe à cavités progressives comportant un stator hélicoïdal, une armature logeant le stator et le rotor, et un conduit fixé à une ouverture de la pompe à cavités progressives ; ledit conduit comprenant :
- une bague de centrage pourvue d'une portion tubulaire et d'un collet ayant une arête chanfreinée ouverte vers l'extérieur et vers une bague coulissante;
- la bague coulissante montée coulissante sur la portion tubulaire de la bague de centrage, la bague coulissante ayant un bord chanfreiné ouvert vers l'extérieur et vers la bague de centrage;
- un anneau intercalaire démontable ayant une première face inférieure oblique posée en appui contre l'arête chanfreinée de la bague de centrage et une deuxième face inférieure oblique posée en appui contre le bord chanfreiné de la bague coulissante.

La pompe comporte en outre un boîtier contenant le mécanisme de transmission et un mécanisme de maintien de la distance entre le conduit et le boîtier.

Ce mécanisme est par exemple constitué par des tirants reliant la bride au boitier de réception du fluide ou par des pieds de support de l'extrémité libre de l'armature fixés au sol.
- Le conduit comprend une bride de support ayant une ouverture traversante et un lamage pratiquée autour de l'ouverture traversante, et dans lequel une face transversale de la bague de centrage est propre à être positionnée dans ledit lamage.
- La bague de centrage ou de la bride de support comprend une saignée, et un joint d'étanchéité agencé dans la saignée pour réaliser l'étanchéité entre la bride de support et la bague de centrage.
- La portion tubulaire de la bague de centrage comporte une gorge et un joint d'étanchéité disposé dans ladite gorge.
- La bague coulissante comporte un épaulement interne contre lequel l'extrémité de l'armature du stator est emmanchée.
- La bague de centrage et/ou la bague coulissante comporte une rainure périphérique dans laquelle un outil peut être inséré pour faire coulisser la bague coulissante par rapport à la bague de centrage.
- L'anneau intercalaire comprend deux demi-coquilles fixées l'une à l'autre par des vis.

L'invention sera mieux comprise à la lecture de la description qui va suivre, donnée uniquement à titre d'exemple et faite en se référant aux figures sur lesquelles :
- la figure 1 est une vue en coupe selon un plan vertical d'un dispositif de pompage selon un premier mode de réalisation de l'invention ;
- la figure 2 est une vue en coupe verticale de l'organe mâle;
- la figure 3 est une vue en perspective de l'organe mâle ;
- la figure 4 est une vue d'une partie agrandie de la figure 1 illustrant un organe de fixation mâle du rotor accouplé à un organe de fixation femelle du mécanisme de transmission, lorsqu'une bague de verrouillage est en position verrouillée ;
- la figure 5 est une vue similaire à la figure 4 lorsque la bague de déverrouillage en position déverrouillée ;
- la figure 6 est une vue en coupe transversale d'une partie de la figure 1, le plan de coupe est représenté sur la figure 1 ;
- la figure 7 est une vue d'une partie agrandie de la figure 1 illustrant un organe de fixation mâle du rotor accouplé à un organe de fixation femelle du mécanisme de transmission, dans un mode de réalisation ne comprenant pas de bague de verrouillage ;
- la figure 8 est une vue en coupe selon un plan vertical d'un dispositif de pompage selon un deuxième mode de réalisation de l'invention ;
- la figure 9 est une vue en perspective de l'organe mâle du dispositif de pompage selon le deuxième mode de réalisation.
- la figure 10 est une vue en coupe selon un plan vertical de l'organe mâle du dispositif de pompage selon le deuxième mode de réalisation de l'invention ;
- la figure 11 est une vue en perspective du carter de l'organe femelle propre à recevoir l'organe mâle du dispositif de pompage illustré sur la figure 10 ;
- la figure 12 est une vue en coupe du carter illustré sur la figure 11 ;
- la figure 13 est une vue en coupe transversale d'une extrémité du stator et d'un conduit monté à l'extrémité de la pompe ; et
- la figure 14 est une vue de dessus d'une extrémité du stator et du conduit fixé à l'extrémité de la pompe.

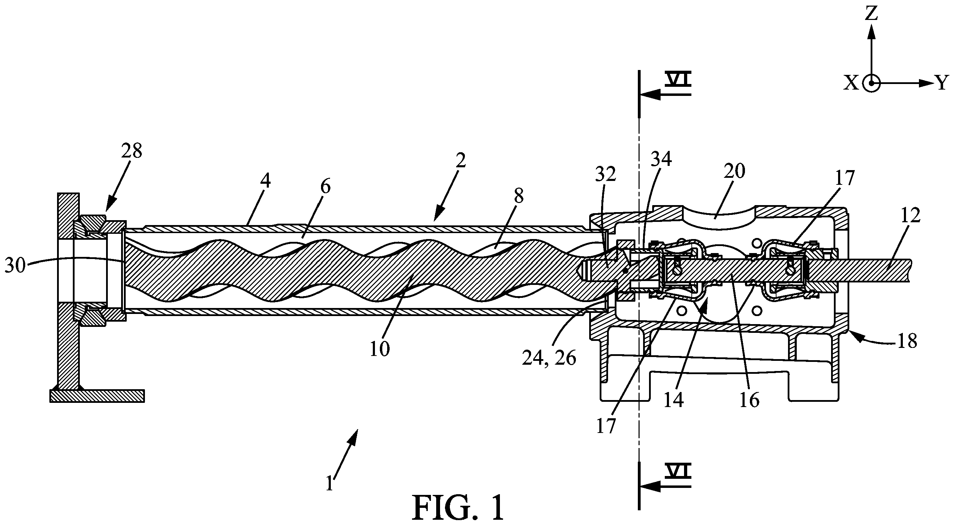

Dans la description qui va suivre, le dispositif de pompage 1 selon l'invention est défini par rapport à un repère orthogonal direct (X,Y,Z) illustré sur la figure 1. Ce repère comprend une première direction X, une deuxième direction Y et une troisième direction Z. La première direction X et la deuxième direction Y définissent un plan horizontal. La deuxième Y et la troisième Z directions définissent un plan longitudinal. La première X et la troisième Z directions définissent un plan transversal. Dans cette description, les termes « inférieur », « supérieur », « droite », « gauche » sont définis par rapport à un dispositif de pompage 1 disposé comme illustré sur la figure 1. Par convention, les angles sont considérés comme positif lorsqu'ils sont dans un sens antihoraire dans la présente demande de brevet.

En référence à la figure 1, le dispositif de pompage 1 volumétrique selon un premier mode de réalisation de l'invention comporte :
- une pompe à cavités progressives 2 comprenant une armature 4 cylindrique creuse, un stator 6 agencé dans l'armature 4 et pourvu d'une cavité hélicoïdale 8 et un rotor hélicoïdal 10 logé dans la cavité hélicoïdale 8 du stator et ayant un axe directeur parallèle à la deuxième direction y;
- un moteur non représenté ayant un arbre de sortie 12 propre à entraîner le rotor 10 en rotation ;
- un mécanisme de transmission 14 comprenant un arbre d'entraînement intermédiaire 16 accouplé de manière amovible au rotor 10 et à l'arbre de sortie 12 et des manchons 17 de protection étant emmanché sur les accouplements, le mécanisme de transmission 14 étant constitué par un cardan ou une bielle flexible ;
- un boîtier 18 qui abrite le mécanisme de transmission 14, le boîtier 18 possédant une ouverture latérale 20 constituant l'entrée ou le refoulement du produit et une ouverture axiale 24, une première ouverture 26 de la pompe à cavités progressives 2 est fixée à l'ouverture axiale 24 ; et
- un conduit 28 de refoulement ou d'entrée du fluide (selon le sens de fonctionnement du dispositif de pompage) solidarisé de manière étanche à une deuxième ouverture 30 de la pompe à cavités progressives, le conduit 28 est propre à être connecté à une tuyauterie.

Le rotor 10 est pourvu d'un organe de fixation mâle 32 et le mécanisme de transmission 14 comprend un organe de fixation femelle 34 propre à être accouplé et désaccouplé à l'organe de fixation mâle 32.

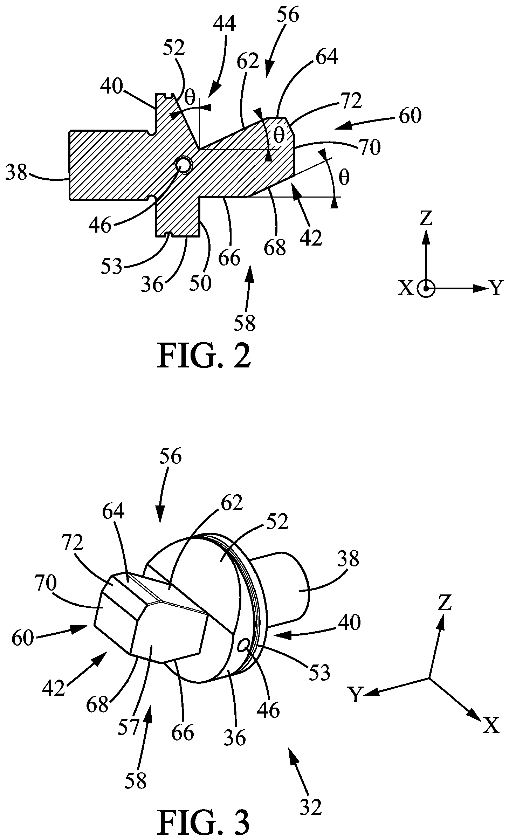

En référence aux figures 2 et 3, l'organe de fixation mâle 32 réalisé d'un seul tenant, comporte une embase 36 cylindrique pourvue d'un côté d'un embout cylindrique 38 et de l'autre d'une saillie axiale 42.

L'embase 36 présente en outre une face transversale 40 plane du côté de l'embout cylindrique et une face transversale opposée 44 du côté de la saillie axiale.

La face transversale opposée 44 possède dans sa partie inférieure, une paroi de butée 50 parallèle au plan transversal (x,z) et, dans sa partie supérieure, une paroi inclinée 52. La paroi de butée 50 est contiguë et perpendiculaire à la paroi d'appui proximale 66. La paroi inclinée 52 est inclinée d'un angle, dit angle de verrouillage θ, par rapport au plan transversal (x,z). L'inclinaison de la paroi inclinée 52 permet le basculement de l'organe mâle 32 par rapport à l'organe femelle 34, comme explicité plus loin dans la description. La paroi inclinée 52 forme également un repère de l'angle autorisant l'insertion de l'organe mâle dans l'organe femelle, lors de l'accouplement du rotor 10 avec le mécanisme de transmission 14.

Selon l'invention, l'angle de verrouillage θ est compris entre 5° et 60°. En particulier, l'angle de verrouillage θ est compris entre 15° et 35 °. De préférence, l'angle de verrouillage θ est sensiblement égal à 25°.

La face circulaire de l'embase 36 comporte une gorge 53 et un joint d'étanchéité annulaire 54 disposé dans la gorge.

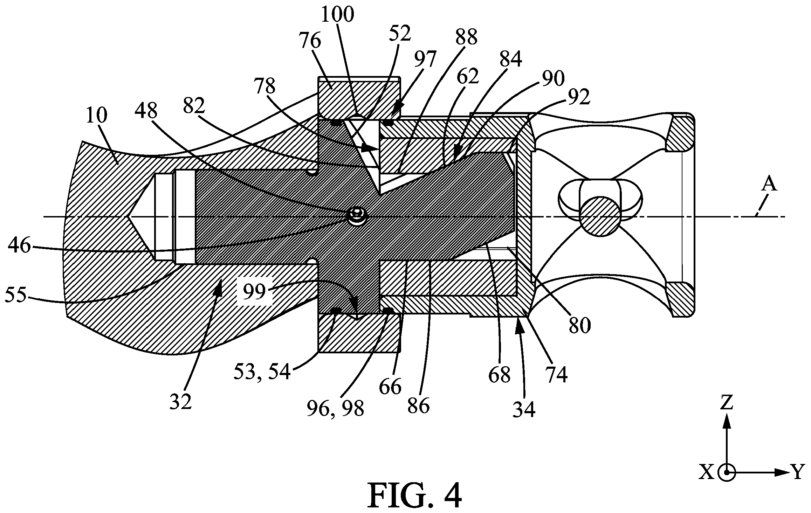

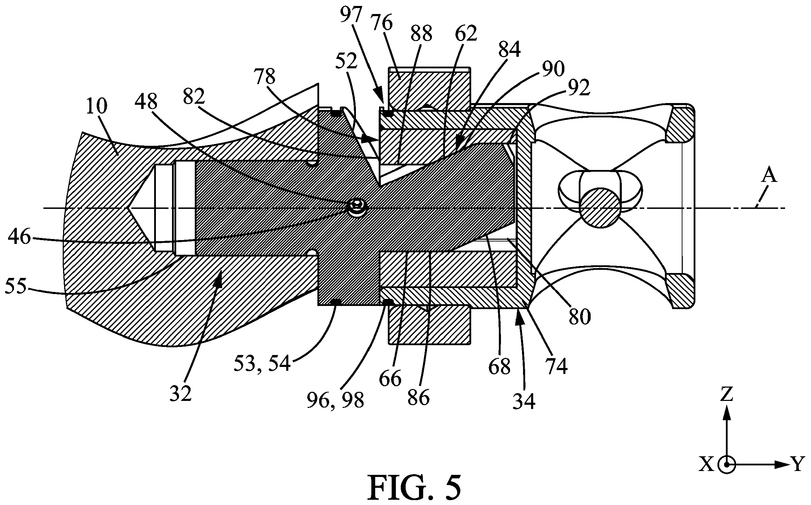

L'embase 36 comporte un trou 46 axial traversant et partiellement taraudé. Des doigts d'indexage 48 aussi appelés poussoirs à ressort sont vissés de chaque côté du trou 46 comme visible sur les figures 4 et 5.

L'embout cylindrique 38 est fretté dans un orifice longitudinal 55 du rotor comme illustré sur les figures 1,4 et 5 et 7.

En variante, l'embout cylindrique 38 est fileté et est propre à être vissé dans un trou taraudé axial 55 du rotor.

En variante, l'organe mâle 32 est directement usiné avec le rotor.

La saillie axiale 42 possède la forme générale d'un quadrilatère incliné vers le haut. Dans un plan de coupe transversal, la saillie axiale 42 présente une section rectangulaire. Cette forme permet la transmission du couple de l'arbre d'entraînement intermédiaire 16 au rotor 10.

En particulier, en référence à la figure 3, la saillie axiale 42 comprend une face supérieure 56, deux faces latérales verticales 57, une face inférieure 58 opposée à la face supérieure, et une face d'extrémité 60. La face inférieure est aussi appelée première face 58. La face supérieure est aussi appelée deuxième face 56.

La face supérieure 56 comporte une paroi extérieure de verrouillage 62 contiguë à la paroi inclinée 52 selon la deuxième direction y, et une paroi horizontale 64 s'étendant dans le prolongement de la paroi extérieure de verrouillage 62 selon la deuxième direction y. La paroi extérieure de verrouillage 62 forme un angle d'au moins 90° avec la paroi inclinée 52. Cet angle permet l'insertion de l'organe mâle dans l'organe femelle lors de l'insertion de l'organe mâle 32 dans l'organe femelle 34.

Lorsque l'organe mâle 32 est agencé dans l'organe femelle 34 dans une position de fixation, comme représentée sur les figures 4 et 5, la paroi extérieure de verrouillage 62 est inclinée de l'angle de verrouillage θ par rapport à un plan horizontal.

La face inférieure 58 comporte une paroi d'appui proximale 66 sensiblement parallèle à la paroi horizontale 64 et une paroi de coulissement distale 68 sensiblement parallèle à la paroi de verrouillage 62.

La face d'extrémité 60 comprend une paroi verticale 70 et une paroi supérieure inclinée 72.

En variante, la saillie axiale 42 présente une section carré ou polygonale dans un plan de coupe transversal.

En référence aux figures 4 et 5, l'organe de fixation femelle 34 comprend un carter cylindrique 74 ayant un axe A-A parallèle à la deuxième direction Y, et une bague de verrouillage 76 montée coulissante autour du carter 74.

Une face transversale 78 du carter située du côté du rotor, présente un évidement axial 80 entouré d'un bord transversal latéral 82.

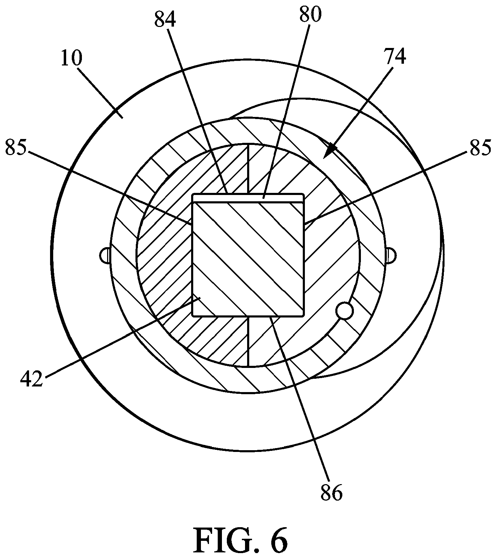

L'évidement axial 80 délimite un espace intérieure parallèpipédique comportant une face supérieure 84, deux faces latérales verticales 85 représentées sur la figure 6 et une face inférieure 86.

La face supérieure 84 comprend :
- une paroi d'entrée 88 adjacente au bord transversal latéral 82 et parallèle au plan horizontal (x,y).
- une paroi intérieure de verrouillage 90 située dans le prolongement de la paroi d'entrée 88 selon la deuxième direction y. La paroi intérieure de verrouillage 90 est inclinée d'un angle de verrouillage θ par rapport au plan horizontal (x,y).
- une paroi d'extrémité 92 située dans le prolongement de la paroi intérieure de verrouillage 90 selon la deuxième direction y. La paroi d'extrémité 92 est parallèle au plan horizontal (x,y). De préférence, la paroi horizontale 64 de l'organe mâle n'est pas en contact avec la paroi d'extrémité 92 pour garantir le contact entre la paroi intérieure de verrouillage 90 et la paroi extérieure de verrouillage 62.

La face inférieure 86 est une paroi parallèle au plan horizontal (x,y), appelée première paroi intérieure de coulissement.

Le carter 74 possède en outre une gorge 96 aménagée le long d'un bord 97 de la face cylindrique du carter, et un joint d'étanchéité 98 disposé dans la gorge.

La bague de verrouillage 76 est propre à coulisser sur le carter 74 entre une position de verrouillage illustrée sur la figure 4, et une position de déverrouillage illustrée sur la figure 5.

Comme visible sur la figure 4, la bague de verrouillage 76 présente une largeur supérieure à la distance entre la gorge 96 du carter 74 et la gorge 53 de l'embase 36. La bague de verrouillage 76 recouvre ainsi l'ensemble de l'embase 36 ainsi que le bord 97 du carter comprenant la gorge et le joint d'étanchéité. Ainsi, dans la position de verrouillage, la bague de verrouillage empêche la désolidarisation de l'organe mâle 32 et de l'organe femelle 34 et l'introduction de liquide dans l'évidement axial situé sous la bague de verrouillage 76.

La face interne 99 de la bague de verrouillage comprend une rainure 100 située proche du plan médian transversal de la bague. La rainure 100 présente par exemple une section tronconique. Le doigt d'indexage 48 est propre à s'introduire dans la rainure 100, lorsque la bague de verrouillage 76 est située dans une position axiale verrouillée correcte.

En fonctionnement, l'organe femelle 34 est fixé à l'arbre d'entrainement intermédiaire 16 par exemple par frettage ou vissage. Le carter peut également être usiné en une seule pièce avec l'articulation constitutive du joint de cardan.

Pour accoupler le rotor 10 au mécanisme de transmission 14, le rotor 10 est incliné d'un angle de déverrouillage -θ par rapport au plan horizontale (x,y). La saillie axiale 42 de l'organe mâle est positionnée au droit de l'évidement axial 80 du carter. Puis, en référence aux figures 1, 4 et 5, l'utilisateur pousse le rotor 10 vers la droite selon la deuxième direction y. La paroi de coulissement distale 68 coulisse sur la paroi intérieure de coulissement 86 jusqu'à ce que la paroi de butée 52 soit en butée contre le bord transversal latéral 82. Le rotor 10 est incliné de l'angle de déverrouillage +θ jusqu'à ce qu'il s'étende horizontalement.

Lorsque l'organe mâle 32 est dans cette position de fixation, la paroi extérieure de verrouillage 62 est en butée contre la paroi intérieure de verrouillage 90 et empêche le retrait du rotor de l'évidement axial 80. La bague de verrouillage 76 est coulissée afin d'être positionnée dans la position de verrouillage illustrée sur la figure 4. Les doigts d'indexage 48, poussés par leurs ressorts s'insèrent dans la rainure 100 pour bloquer la bague de verrouillage 76 en position.

Avantageusement, lorsque l'organe mâle 32 est accouplé à l'organe femelle 34, le bord transversal latéral 82 du carter forme un épaulement contre lequel la paroi de butée verticale 50 de l'organe mâle s'appui. Cet épaulement permet de compenser les efforts de compression axiaux subis par le rotor.

Pour désaccoupler le rotor 10 et éventuellement le stator au mécanisme de transmission 14, la bague de verrouillage 76 est tout d'abord coulissée pour être positionnée dans la position de déverrouillage illustrée sur la figure 5. Grâce au ressort et à la pente de la section conique ou tronconique de la rainure 100, les doigts d'indexage sont repoussés dans leur logement même si le ressort exerce une pression tendant à faire ressortir les doigts. Le rotor 10 et éventuellement le stator est pivoté d'un angle de déverrouillage -θ par rapport au plan horizontal (x,y). A cet effet, la paroi inclinée 52 de l'organe mâle est positionnée contre le bord transversal latéral 82. Puis, le rotor est tiré selon la deuxième direction y vers la gauche en références aux figures 1, 4 et 5. La paroi de coulissement distale 68 coulisse sur la paroi intérieure de coulissement jusqu'à ce que l'organe mâle sorte de l'évidement axial 80. Si l'utilisateur le souhaite, le rotor 10 peut à nouveau être incliné de l'angle de déverrouillage +θ pour être étendu horizontalement.

En variante, le mécanisme de transmission 14 est équipé d'un organe de fixation mâle 32 et le rotor 10 est muni d'un organe de fixation femelle 34.

En variante, l'organe mâle 32 est constitué d'un seul tenant avec le rotor.

En variante l'organe mâle 32 ne comporte qu'un seul doigt d'indexage 48.

En variante, l'organe de fixation mâle 32 est réalisé par un assemblage de plusieurs pièces.

En variante, l'embase 36 comporte un trou 46 axial non traversant.

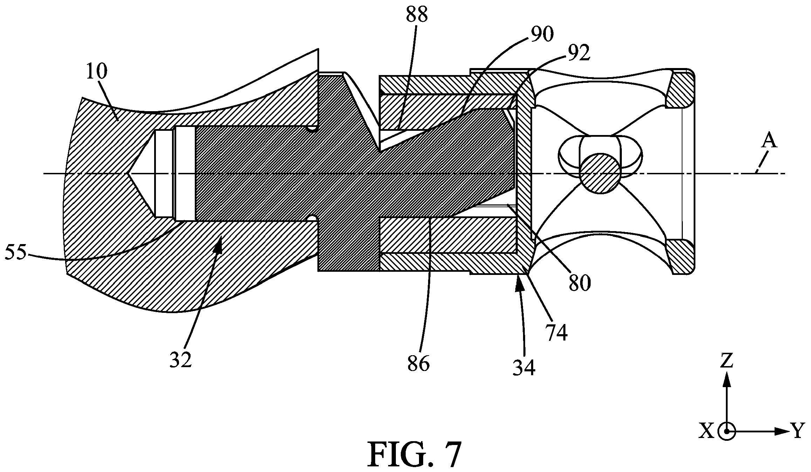

Le dispositif de pompage selon la présente invention peut également être mis en œuvre sans la bague de verrouillage comme illustré sur la figure 7. Ce mode de réalisation est identique au mode de réalisation décrit précédemment à l'exception de l'absence de bague de verrouillage 76 et des doigts d'indexage 48. Ce mode de réalisation ne sera pas décrit en détail une seconde fois.

Selon une variante du mode réalisation sans bague de verrouillage, le carter 74 présente une forme extérieure non cylindrique par exemple parallélépipèdique.

Avantageusement, l'arbre d'entraînement intermédiaire 16 peut également être accouplé à l'arbre de sortie 12 par un ensemble organe mâle 32 organe femelle 34. Cet ensemble peut être entouré d'un manchon de protection 17 comme illustré sur la figure 1.

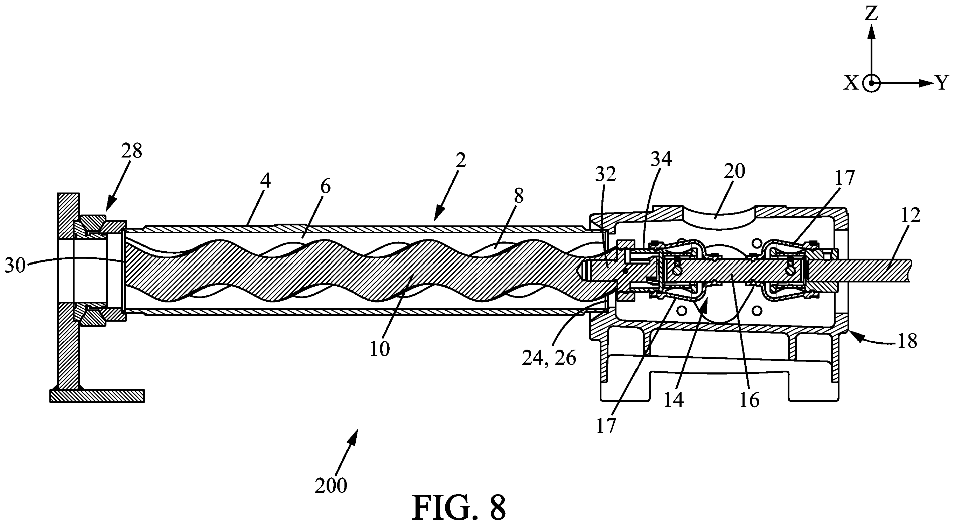

Le dispositif de pompage 200 selon le deuxième mode de réalisation est représenté sur la figure 8. Il est similaire au dispositif de pompage 1 selon le premier mode de réalisation. Les éléments techniques du dispositif de pompage 200 selon le deuxième mode de réalisation identiques ou similaires aux éléments techniques du dispositif de pompage 1 selon le premier mode de réalisation, portent les mêmes références et ne seront pas décrits une seconde fois.

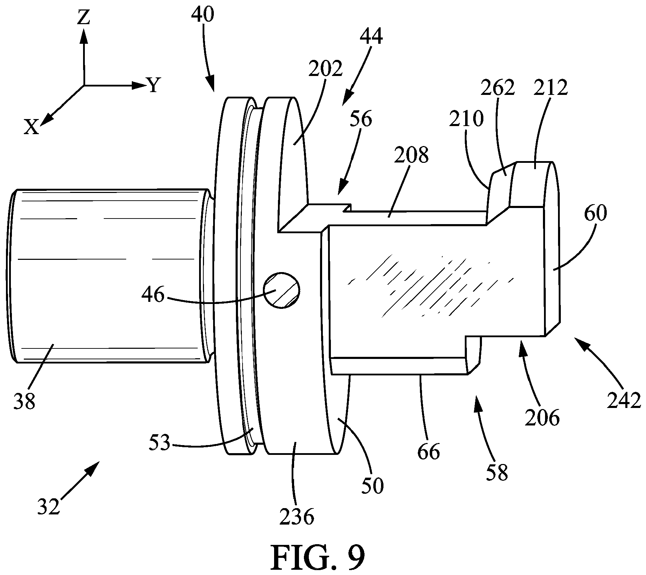

En référence à la figure 9, l'embase cylindrique 236 comporte une face transversale 40 du côté de l'embout cylindrique 38 et une face transversale opposée 44 du côté de la saillie axiale. La face transversale opposée 44 comporte dans sa partie supérieure une paroi transversale 202 parallèle au plan X-Z et en retrait par rapport à un plan contenant la paroi transversale de butée 50. La paroi transversale 202 est décalée selon la deuxième direction Y par rapport à la paroi transversale de butée 50. Un dégagement 204 est ainsi généré entre la paroi transversale 202 et le bord transversal latéral 82 du carter. Ce dégagement permet le basculement de l'organe male 32 par rapport au carter 74.

La première face 58 de la saille axiale 242 comporte un décrochement 206 ouvert sur la face d'extrémité 60 de la saillie axiale. Ce décrochement 206 facilite l'introduction et permet le pivotement de l'organe maie 32 dans l'organe femelle 34.

La deuxième face 56 de la saillie radiale comporte :
- une première paroi 208 jouxtant l'embase 236, la première paroi 208 étant parallèle à la paroi d'appui proximale 66,
- une deuxième paroi 210 agencée dans le prolongement de la première paroi 208 selon la deuxième direction Y, la deuxième paroi 210 étant perpendiculaire à la première paroi 208,
- une paroi extérieure de verrouillage 262 disposée dans le prolongement de la deuxième paroi 210 selon la deuxième direction Y ; la paroi extérieure de verrouillage 262 étant inclinée d'un angle de verrouillage θ par rapport à la paroi d'appui proximale 66;
- une troisième paroi 212 en révolution autour de l'axe Y et perpendiculaire à la paroi d'extrémité 60.

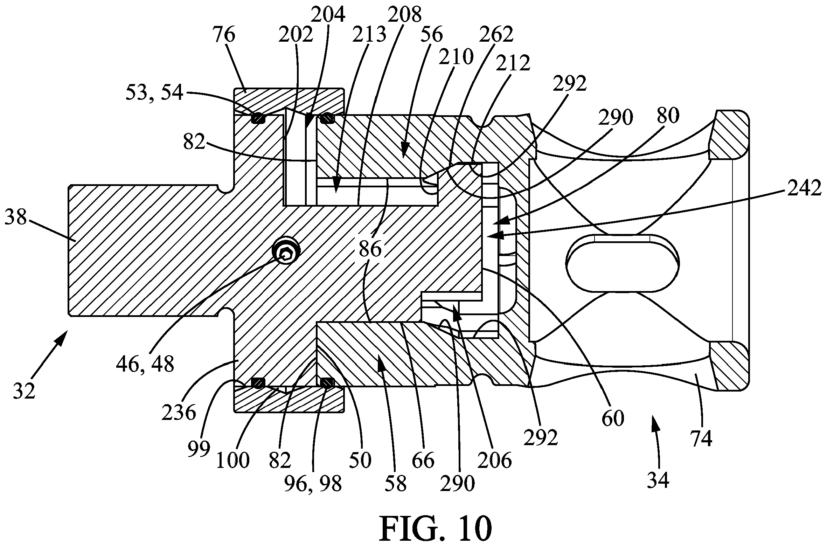

Avantageusement, comme visible sur la figure 10, la première paroi 208 et la deuxième paroi 210 forment un dégagement 213 facilitant l'insertion de l'organe mâle 32 dans l'organe femelle 34.

Dans le mode réalisation représenté, la paroi extérieure de verrouillage 262 et la troisième paroi 212 présentent une forme légèrement bombée de part et d'autre d'un plan central (Y, Z). Cette forme bombée qui résulte d'un profil de tournage.

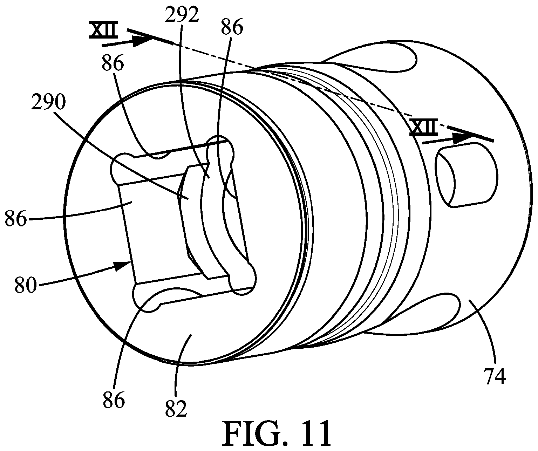

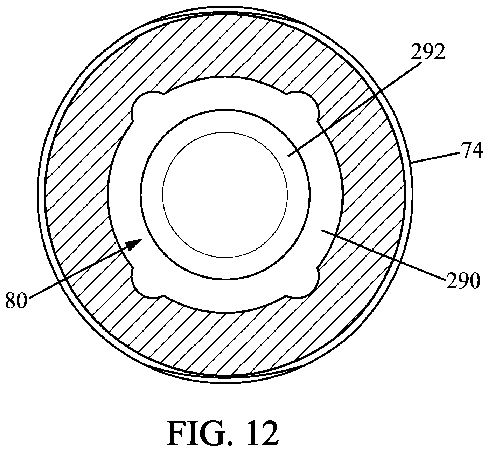

Dans ce deuxième mode de réalisation, l'évidement axial 80 comporte quatre parois intérieures de coulissement 86 et quatre parois intérieures de verrouillage 290. Comme visible sur les figures 11 et 12, les quatre parois intérieures de coulissement 86 sont disposées perpendiculairement les unes aux autres. Les quatre parois intérieures de coulissement 86 sont disposées dans des plans contenant la deuxième direction Y. Ainsi, les quatre parois intérieures de coulissement 86 sont disposées dans des plans parallèles au plan (X,Y) ou au plan (Y,Z). Selon une vue en coupe perpendiculaire à la deuxième direction Y, les quatre parois intérieures de coulissement 86 forment un rectangle ou un carré.

Les parois intérieures de verrouillage 290 sont disposées chacune dans le prolongement d'une paroi intérieure de coulissement 86 selon la deuxième direction Y. Dans le mode de réalisation représenté, les parois intérieures de verrouillage 290 présentent chacune une forme creusée en arrondie adaptée pour recevoir la paroi extérieure de verrouillage 262 de la saillie axiale.

L'évidement axial 80 comporte en outre quatre parois de fond 292. Chaque paroi de fond 292 s'étend dans le prolongement d'une paroi intérieure de verrouillage 290. Chaque paroi de fond 292 présente une forme creuse arrondie adaptée pour recevoir la troisième paroi 212 de la saillie axiale.

Avantageusement, dans ce mode de réalisation, l'organe maie peut être monté sur l'organe femelle selon quatre orientations différentes dès lors que les quatre parois intérieures de coulissement 86 forment un carré.

En variante, les parois intérieures de coulissement 86 forment un polygone selon une vue en coupe perpendiculaire à la deuxième direction y.

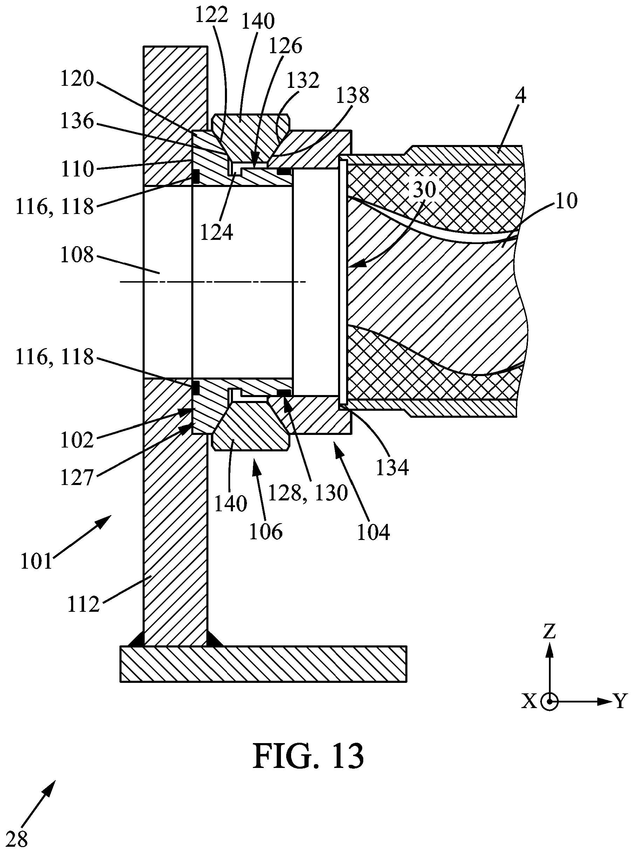

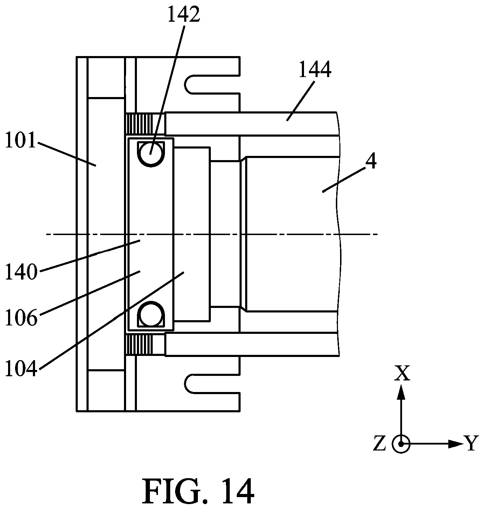

En variante, la première face 56 ne comporte pas de deuxième paroi 210. L'invention concerne également un conduit 28 du fluide rétractable axialement et amovible représenté sur les figures 13 et 14.

Le conduit 28 comprend une bride de support 101, une bague de centrage 102, une bague coulissante 104 et un anneau intercalaire 106 démontable.

La bride de support 101 comporte une ouverture traversante 108 destinée au passage du fluide qui sort ou entre de/par l'ouverture 30 de la pompe à cavités progressives, un lamage 110 pratiqué autour de l'ouverture traversante 108, et un pied 112 destiné à être posé au sol.

La bague de centrage 102 est pourvue d'un collet 120 ayant une arête chanfreinée 122 ouverte vers l'extérieur et vers la bague coulissante 104, d'une rainure périphérique 124 et d'une portion tubulaire 126 formant coulisse.

La face transversale 127 de la bague de centrage situé du côté du collet 120 est propre à être positionné dans le lamage 110 de la bride de support 101.

La face transversale 127 comprend une saignée 116, et un joint d'étanchéité 118 agencé dans la saignée pour réaliser l'étanchéité entre la bride de support 101 et la bague de centrage102.

Un outil peut être inséré dans la rainure périphérique 124 pour faire coulisser la bague coulissante 104 une fois que l'anneau intercalaire 106 a été retiré.

La portion tubulaire 126 comporte une gorge 128 et un joint d'étanchéité 130 disposé dans la gorge 128.

La bague coulissante 104 est montée coulissante sur la portion tubulaire 126 de la bague de centrage.

La bague coulissante 104 comprend un bord chanfreiné 132 ouverte vers l'extérieur et vers la bague de centrage 102. La face intérieure de la bague coulissante située du côté de l'armature 4 comporte un épaulement interne 134 contre lequel l'extrémité de l'armature 4 du stator est emmanchée. L'armature 4 de la pompe est fixée d'un côté au boitier 18 et bloquée de l'autre côté contre l'épaulement interne 134 de la bague coulissante 104.

L'anneau intercalaire démontable 106 comprend une première face inférieure oblique 136 posée en appui contre l'arête chanfreinée 122 de la bague de centrage et une deuxième face inférieure oblique 138 posée en appui contre le bord chanfreiné 132 de la bague coulissante.

Dans le mode de réalisation représenté, l'anneau intercalaire 106 démontable comprend deux demi-coquilles 140 fixées l'une à l'autre par des vis 142 visibles tel qu'illustré sur la figure 9.

Le dispositif de pompage selon l'invention comporte en outre un mécanisme de fixation axiale de la distance entre le conduit 28 et le boîtier 18. Dans le mode de réalisation représentée sur la figure 9, ce mécanisme est constitué par des tirants 144 reliant le conduit 28 au boitier de réception du fluide 18. Dans le mode de réalisation représenté sur la figure 9, les deux tirants 144 maintiennent en position le conduit 28 pour conserver une distance constante entre la bride de support 101 et le boitier 18. Les deux extrémités des tirants 144 sont filetées, l'une avec un pas à gauche et l'autre avec un pas à droite pour faciliter le réglage de cette distance et la conserver constante même lors du démontage de 28.

Selon une variante non représentée, le maintien d'une distance constante entre le conduit 28 et le boitier 18 est réalisé par la fixation du pied 112 sur le sol à une distance prédéfinie du boitier 18 lors du premier montage de la pompe.

En variante, la rainure périphérique 124 est réalisée sur la bague coulissante 104 plutôt que sur la bague de centrage 102.

En variante, la saignée 116 est située sur la bride de support 101 plutôt que sur la bague de centrage 102.

Lorsqu'il est démonté, le conduit 28 du dispositif de pompage 1 permet de dégager de l'espace entre la bride de support 101 et l'ensemble armature 4, stator 6 et rotor 10 dans la direction longitudinale de la pompe. Cet espace permet d'incliner l'ensemble armature 4, stator 6 et rotor 10 pour désaccoupler l'organe mâle 32 du rotor de l'organe femelle 34 du mécanisme de transmission. Ainsi, avantageusement, il n'est pas nécessaire de démonter une partie de la tuyauterie du client.

Pour démonter le conduit 28, les vis 142 fixant les deux demi-coquilles 140 sont dévissées. Les deux demi-coquilles 140 sont déposées de manière à ne plus être portées par la bague de centrage 102 ou la bague coulissante 104.

La bague coulissante 104 est coulissée sur la portion tubulaire 126 de la bague de centrage 102 en sens opposé de la deuxième direction Y. Un espace vide est ainsi dégagé entre la bague coulissante 104 et l'armature 4. La bague de centrage 102 est alors déplacée selon la deuxième direction y vers l'armature 4. La bague de centrage 102 est ainsi écartée de la bride de support 101. La bague coulissante 104 et la bague de centrage 102 sont ensuite extraites du conduit 28. Un espace vide est ainsi créé entre la bride de support 101 et l'ensemble armature 4, stator 6 et rotor 10.

Cet espace permet d'incliner l'ensemble armature 4, stator 6 et rotor 10 pour désaccoupler l'organe mâle 32 de l'organe femelle 34 et ainsi détacher l'ensemble armature 4, stator 6 et rotor 10 du boitier 18.

Lors du montage, l'ensemble armature 4, stator 6 et rotor 10 est tout d'abord rapproché du boitier 18 par basculement de cet ensemble pour accoupler l'organe mâle 32 à l'organe femelle 34. Puis, pour remonter le conduit 28, la bague coulissante 104 est glissée sur la portion tubulaire 126 de la bague de centrage. La bague de centrage 102 et la bague coulissante 104 sont alors disposées dans l'espace vide situé entre la bride de support 101 et l'ensemble armature 4, stator 6 et rotor 10. Le collet 120 de la bague de centrage est agencé dans le lamage 110. La bague coulissante 104 est coulissée sur la portion tubulaire 126 de manière à ce que l'épaulement interne 134 vienne en appui contre l'armature 4. A cet effet, un ou deux outils tel que des tournevis, peuvent être introduit(s) dans la rainure périphérique 124 pour faire coulisser la bague coulissante 104 vers la droite grâce au bras de levier créé par l'outil
Puis l'anneau intercalaire démontable 106 est intercalé entre et contre la bague de centrage 102 et la bague coulissante 104. La première face intérieure oblique 136 de l'anneau est disposée en appui contre l'arête chanfreinée 122 et la deuxième face intérieure oblique 138 de l'anneau est disposée en appui contre le bord chanfreiné 132 de la bague coulissante. Lorsque l'anneau intercalaire 106 est constitué par deux demi-coquilles, comme dans l'exemple représenté, les vis 142 sont vissées pour fixées les deux demi-coquilles ensemble et repousser selon l'axe y les faces 136 et 138.

## Revendications

1. Dispositif de pompage (1, 200) défini par rapport à un repère orthogonal direct comprenant une première direction (X), une deuxième direction (Y) et une troisième direction (Z), , le dispositif de pompage (1) comportant :
- une pompe à cavités progressives (2) comprenant un rotor hélicoïdal (10) ayant un axe directeur parallèle à la deuxième direction (Y) ;
- un mécanisme de transmission (14) fixé au rotor hélicoïdal (10), le mécanisme de transmission (14) comprenant un organe de fixation parmi un organe mâle (32) et un organe femelle (34), le rotor (10) comprenant l'autre organe parmi l'organe mâle (32) et l'organe femelle (34);
l'organe femelle (34) comportant un carter (74) pourvu d'un évidement axial (80), l'évidement axial (80) comportant au moins une paroi intérieure de coulissement (86) s'étendant dans un plan contenant la deuxième direction (Y) ; l'organe mâle (32) comportant une embase (36, 236) et une saillie axiale (42, 242) solidaire de l'embase; **caractérisé en ce que** la saillie axiale (42, 242) comprend une première face (58) et une deuxième face (56) opposée à la première face ; ladite première face (58) comporte une paroi d'appui proximale (66) ; ladite deuxième face (56) comprenant une paroi extérieure de verrouillage (62, 262) inclinée d'un angle de verrouillage (θ) par rapport à la paroi intérieure de coulissement (86), ledit angle de verrouillage (θ) étant compris entre 5° et 90°;
et **en ce que** l'évidement axial (80) comprend au moins une paroi intérieure de verrouillage (90, 290) inclinée dudit angle de verrouillage (θ) par rapport à ladite au moins une paroi intérieure de coulissement (86), la paroi extérieure de verrouillage (62, 262) étant en butée contre la paroi intérieure de verrouillage (90, 290), lorsque l'organe mâle (32) est accouplé à l'organe femelle (34).

2. Dispositif de pompage (1, 200) selon la revendication 1, dans lequel ledit angle de verrouillage (θ) est compris entre 5° et 60° et est, de préférence, compris entre 15° et 35°.

3. Dispositif de pompage (1, 200) selon l'une quelconque des revendications 1 et 2, dans lequel la saillie axiale (42, 242) présente une section radiale de forme polygonale et, de préférence, rectangulaire.

4. Dispositif de pompage (1, 200) selon l'une quelconque des revendications 1 à 3, dans lequel le rotor (10) comporte l'organe mâle (32).

5. Dispositif de pompage (1, 200) selon l'une quelconque des revendications 1 à 4, dans lequel l'embase (36, 236) comporte une paroi transversale de butée (50) contiguë et perpendiculaire à la paroi d'appui proximale (66), et dans lequel le carter (74) est pourvu d'un bord transversal latéral (82), le bord transversal latéral (82) formant un épaulement pour la paroi de butée (50) de l'embase, lorsque l'organe mâle (32) est accouplé à l'organe femelle (34).

6. Dispositif de pompage (1) selon l'une quelconque des revendications 1 à 5, dans lequel l'embase (36) comporte une paroi inclinée (52) contiguë et alignée axialement à la paroi extérieure de verrouillage (62), ladite paroi inclinée (52) présentant un angle de verrouillage (θ) par rapport à un plan perpendiculaire à la paroi d'appui proximale (66) ; ladite paroi inclinée (52) autorisant le basculement d'un organe de fixation parmi l'organe mâle (32) et l'organe femelle (34) par rapport à l'autre organe de fixation.

7. Dispositif de pompage (1, 200) selon l'une quelconque des revendications 5 et 6, dans laquelle l'embase (36) et le carter (74) présentent une forme extérieure cylindrique, et dans lequel le dispositif de pompage (1, 200) comporte en outre une bague de verrouillage (76) propre à coulisser entre une position de verrouillage dans laquelle la bague de verrouillage (76) est agencée sur au moins une partie de l'embase (36) et sur au moins une partie du carter (74) et une position de déverrouillage dans laquelle la bague de verrouillage (76) est agencée uniquement autour du carter (74).

8. Dispositif de pompage (1, 200) selon la revendication 7, dans lequel l'embase (36) comporte une gorge (53) et dans lequel l'organe mâle (32) comporte au moins un joint d'étanchéité (54) agencé dans ladite gorge (53), la bague de verrouillage (76) étant disposée au-dessus du joint d'étanchéité (54), lorsque la bague de verrouillage (76) est dans une position de verrouillage.

9. Dispositif de pompage (1, 200) selon l'une quelconque des revendications 7 et 8, dans lequel le carter (74) comporte une gorge (96) et dans lequel le l'organe femelle (34) comporte au moins un joint d'étanchéité (98) agencé dans ladite gorge (96), la bague de verrouillage (76) étant disposée au-dessus du joint d'étanchéité (98), lorsque la bague de verrouillage (76) est dans une position de verrouillage.

10. Dispositif de pompage (1, 200) selon l'une quelconque des revendications 7 à 9, dans lequel l'embase (36) comporte un trou radial (46) et au moins un doigt d'indexage (48) fixé dans ledit trou radial (46), et dans lequel une face interne de la bague de verrouillage (76) comprend une rainure (100) propre à réceptionner une extrémité du doigt d'indexage (48), lorsque la bague de verrouillage (76) est positionnée dans une position de verrouillage.

11. Dispositif de pompage (1) selon l'une quelconque des revendications 1 à 10, dans lequel ladite première face (58) comporte une paroi de coulissement distale (68) parallèle à la paroi extérieure de verrouillage (62), la paroi de coulissement distale (68) étant opposée à une partie de la paroi extérieure de verrouillage (62).

12. Dispositif de pompage (200) selon l'une quelconque des revendications 1 à 5 et 7 à 10, dans lequel la deuxième face (56) de la saillie axiale comporte au moins une première paroi (208) jouxtant l'embase (236), une deuxième paroi (210) agencée dans le prolongement de la première paroi (208) selon la deuxième direction (Y), la première paroi (208) étant parallèle à la paroi d'appui proximale (66), la deuxième paroi (210) étant perpendiculaire à la première paroi (208), et dans lequel ladite paroi extérieure de verrouillage (262) est disposée dans le prolongement de la deuxième paroi (210) selon la deuxième direction (Y).

13. Dispositif de pompage (200) selon l'une quelconque des revendications 1 à 5, 7 à 10 et 12, dans lequel ladite paroi extérieure de verrouillage (262) présente une forme bombée et dans lequel ladite au moins une paroi intérieure de verrouillage (290) présente une forme creuse adaptée pour recevoir ladite paroi extérieure de verrouillage (262).

14. Dispositif de pompage (200) selon l'une quelconque des revendications 1 à 5, 7 à 10, 12 et 13, dans lequel l'évidement axial (80) comporte quatre parois intérieures de coulissement (86) disposées perpendiculairement les unes aux autres et quatre parois intérieures de verrouillage (290), chaque paroi intérieure de verrouillage (290) étant disposée dans le prolongement d'une paroi intérieure de coulissement (86) selon la deuxième direction (Y).

15. Dispositif de pompage (200) selon l'une quelconque des revendications 1 à 5, 7 à 10, 12 à 14, dans lequel la première face (58) de la saillie axiale comporte un décrochement (206) disposé dans le prolongement la paroi d'appui proximale (66) selon la deuxième direction (Y), ledit décrochement (206) étant ouvert sur une face d'extrémité (60) de la saillie axiale.

16. Dispositif de pompage (200) selon la revendication 5, dans lequel l'embase (236) comporte une paroi transversale (202) disposée dans le prolongement de la deuxième face (56) selon la deuxième direction Y; ladite paroi transversale (202) étant en retrait par rapport à un plan contenant la paroi transversale de butée (50) de manière à générer un dégagement (204) entre ladite paroi transversale (202) et le bord transversal latéral (82) du carter lorsque l'organe maie (32) est engagé dans l'organe femelle (34), ledit dégagement (204) permettant le basculement d'un organe de fixation parmi l'organe mâle (32) et l'organe femelle (34) par rapport à l'autre organe de fixation.

## Patentansprüche

1. Pumpvorrichtung (1, 200), definiert bezüglich eines direkten orthogonalen Koordinatensystems, das eine erste Richtung (X), eine zweite Richtung (Y) und eine dritte Richtung (Z) aufweist, wobei die Pumpvorrichtung (1) aufweist:
- eine Exzenterschneckenpumpe (2), die eine Exzenterschnecke (10) aufweist, die eine Leitachse parallel zur zweiten Richtung (Y) hat;
- einen an der Exzenterschnecke (10) befestigten Übertragungsmechanismus (14), wobei der Übertragungsmechanismus (14) ein Befestigungselement unter einem Einsteckelement (32) und einem Aufnahmeelement (34) enthält, wobei die Schnecke (10) das andere Element unter dem Einsteckelement (32) und dem Aufnahmeelement (34) enthält;
wobei das Aufnahmeelement (34) ein mit einer axialen Aussparung (80) versehenes Gehäuse (74) aufweist, wobei die axiale Aussparung (80) mindestens eine innere Gleitwand (86) aufweist, die sich in einer die zweite Richtung (Y) enthaltenden Ebene erstreckt; wobei das Einsteckelement (32) einen Sockel (36, 236) und einen fest mit dem Sockel verbundenen axialen Vorsprung (42, 242) aufweist;
**dadurch gekennzeichnet, dass** der axiale Vorsprung (42, 242) eine erste Seite (58) und eine der ersten Seite gegenüberliegende zweite Seite (56) enthält; die erste Seite (58) eine proximale Auflagewand (66) aufweist; wobei die zweite Seite (56) eine äußere Verriegelungswand (62, 262) enthält, die um einen Verriegelungswinkel (θ) bezüglich der inneren Gleitwand (86) geneigt ist, wobei der Verriegelungswinkel (θ) zwischen 5° und 90° liegt;
und dass die axiale Aussparung (80) mindestens eine um den Verriegelungswinkel (θ) bezüglich der mindestens einen inneren Gleitwand (86) geneigte innere Verriegelungswand (90, 290) enthält, wobei die äußere Verriegelungswand (62, 262) gegen die innere Verriegelungswand (90, 290) in Anschlag ist, wenn das Einsteckelement (32) mit dem Aufnahmeelement (34) gekoppelt ist.

2. Pumpvorrichtung (1, 200) nach Anspruch 1, wobei der Verriegelungswinkel (θ) zwischen 5° und 60° und vorzugsweise zwischen 15° und 35° liegt.

3. Pumpvorrichtung (1, 200) nach einem der Ansprüche 1 und 2, wobei der axiale Vorsprung (42, 242) einen Radialschnitt polygonaler und vorzugsweise rechtwinkliger Form aufweist.

4. Pumpvorrichtung (1, 200) nach einem der Ansprüche 1 bis 3, wobei die Schnecke (10) das Einsteckelement (32) aufweist.

5. Pumpvorrichtung (1, 200) nach einem der Ansprüche 1 bis 4, wobei der Sockel (36, 236) eine Anschlagsquerwand (50) angrenzend an die und lotrecht zur proximalen Auflagewand (66) aufweist, und wobei das Gehäuse (74) mit einem seitlichen Querrand (82) versehen ist, wobei der seitliche Querrand (82) eine Schulter für die Anschlagwand (50) des Sockels bildet, wenn das Einsteckelement (32) mit dem Aufnahmeelement (34) gekoppelt ist.

6. Pumpvorrichtung (1) nach einem der Ansprüche 1 bis 5, wobei der Sockel (36) eine geneigte Wand (52) angrenzend an die und axial auf die äußere Verriegelungswand (62) ausgerichtet aufweist, wobei die geneigte Wand (52) einen Verriegelungswinkel (θ) bezüglich einer Ebene lotrecht zur proximalen Auflagewand (66) aufweist; wobei die geneigte Wand (52) das Kippen eines Befestigungselements unter dem Einsteckelement (32) und dem Aufnahmeelement (34) bezüglich des anderen Befestigungselements erlaubt.

7. Pumpvorrichtung (1, 200) nach einem der Ansprüche 5 und 6, wobei der Sockel (36) und das Gehäuse (74) eine zylindrische Außenform aufweisen, und wobei die Pumpvorrichtung (1, 200) außerdem einen Verriegelungsring (76) aufweist, der zwischen einer Verriegelungsstellung, in der der Verriegelungsring (76) auf mindestens einem Teil des Sockels (36) und auf mindestens einem Teil des Gehäuses (74) angeordnet ist, und einer Entriegelungsstellung gleiten kann, in der der Verriegelungsring (76) nur um das Gehäuse (74) herum angeordnet ist.

8. Pumpvorrichtung (1, 200) nach Anspruch 7, wobei der Sockel (36) eine Kehle (53) aufweist, und wobei das Einsteckelement (32) mindestens eine in der Kehle (53) angeordnete Dichtung (54) aufweist, wobei der Verriegelungsring (76) über der Dichtung (54) angeordnet ist, wenn der Verriegelungsring (76) in einer Verriegelungsstellung ist.

9. Pumpvorrichtung (1, 200) nach einem der Ansprüche 7 und 8, wobei das Gehäuse (74) eine Kehle (96) aufweist, und wobei das Aufnahmeelement (34) mindestens eine in der Kehle (96) angeordnete Dichtung (98) aufweist, wobei der Verriegelungsring (76) über der Dichtung (98) angeordnet ist, wenn der Verriegelungsring (76) in einer Verriegelungsstellung ist.

10. Pumpvorrichtung (1, 200) nach einem der Ansprüche 7 bis 9, wobei der Sockel (36) ein radiales Loch (46) und mindestens einen im radialen Loch (46) befestigten Indexierfinger (48) aufweist, und wobei eine Innenseite des Verriegelungsrings (76) eine Rille (100) enthält, die ein Ende des Indexierfingers (48) aufnehmen kann, wenn der Verriegelungsring (76) in einer Verriegelungsstellung positioniert ist.

11. Pumpvorrichtung (1) nach einem der Ansprüche 1 bis 10, wobei die erste Seite (58) eine distale Gleitwand (68) parallel zur äußeren Verriegelungswand (62) aufweist, wobei die distale Gleitwand (68) einem Teil der äußeren Verriegelungswand (62) gegenüberliegt.

12. Pumpvorrichtung (200) nach einem der Ansprüche 1 bis 5 und 7 bis 10, wobei die zweite Seite (56) des axialen Vorsprungs mindestens eine an den Sockel (236) angrenzende erste Wand (208), eine in der Verlängerung der ersten Wand (208) gemäß der zweiten Richtung (Y) angeordnete zweite Wand (210) aufweist, wobei die erste Wand (208) parallel zur proximalen Auflagewand (66) ist, die zweite Wand (210) lotrecht zur ersten Wand (208) ist, und wobei die äußere Verriegelungswand (262) in der Verlängerung der zweiten Wand (210) gemäß der zweiten Richtung (Y) angeordnet ist.

13. Pumpvorrichtung (200) nach einem der Ansprüche 1 bis 5, 7 bis 10 und 12, wobei die äußere Verriegelungswand (262) eine gewölbte Form hat, und wobei die mindestens eine innere Verriegelungswand (290) eine vertiefte Form aufweist, die geeignet ist, die äußere Verriegelungswand (262) aufzunehmen.

14. Pumpvorrichtung (200) nach einem der Ansprüche 1 bis 5, 7 bis 10, 12 und 13, wobei die axiale Aussparung (80) vier innere Gleitwände (86), die lotrecht zueinander angeordnet sind, und vier innere Verriegelungswände (290) aufweist, wobei jede innere Verriegelungswand (290) in der Verlängerung einer inneren Gleitwand (86) gemäß der zweiten Richtung (Y) angeordnet ist.

15. Pumpvorrichtung (200) nach einem der Ansprüche 1 bis 5, 7 bis 10, 12 bis 14, wobei die erste Seite (58) des axialen Vorsprungs einen Absatz (206) aufweist, der in der Verlängerung der proximalen Auflagewand (66) gemäß der zweiten Richtung (Y) angeordnet ist, wobei der Absatz (206) zu einer Endseite (60) des axialen Vorsprungs offen ist.

16. Pumpvorrichtung (200) nach Anspruch 5, wobei der Sockel (236) eine in der Verlängerung der zweiten Seite (56) gemäß der zweiten Richtung Y angeordnete Querwand (202) aufweist; wobei die Querwand (202) bezüglich einer die Anschlagsquerwand (50) enthaltenden Ebene eingerückt ist, um einen Freiraum (204) zwischen der Querwand (202) und dem seitlichen Querrand (82) des Gehäuses zu erzeugen, wenn das Einsteckelement (32) in das Aufnahmeelement (34) eingeführt ist, wobei der Freiraum (204) das Kippen eines Befestigungselements unter dem Einsteckelement (32) und dem Aufnahmeelement (34) bezüglich des anderen Befestigungselements erlaubt.

## Claims

1. A pumping device (1, 200) defined relative to a direct orthogonal coordinate system comprising a first direction (X), a second direction (Y) and a third direction (Z), the pumping device (1) including:
- a progressive cavity pump (2) comprising a helical rotor (10) having a directing axis parallel to the second direction (Y);
- a transmission mechanism (14) fastened to the helical rotor (10), the transmission mechanism (14) comprising a fastening member among a male member (32) and a female member (34), the rotor (10) comprising the other member among the male member (32) and the female member (34);
the female member (34) including a casing (74) provided with an axial recess (80), the axial recess (80) including at least one inner sliding wall (86) extending in a plane containing the second direction (Y); the male member (32) including a base (36, 236) and an axial projection (42, 242) integral with the base;
**characterised in that** the axial projection (42, 242) comprises a first face (58) and a second face (56) opposite to the first face; said first face (58) includes a proximal bearing wall (66); said second face (56) comprising an outer locking wall (62, 262) inclined by a locking angle (θ) relative to the inner sliding wall (86), said locking angle (θ) being comprised between 5° and 90°;
and **in that** the axial recess (80) comprises at least one inner locking wall (90, 290) inclined by said locking angle (θ) relative to said at least one inner sliding wall (86), the outer locking wall (62, 262) being in abutment against the inner locking wall (90, 290), when the male member (32) is coupled to the female member (34).

2. The pumping device (1, 200) according to claim 1, wherein said locking angle (θ) is comprised between 5° and 60° and is, preferably, comprised between 15° and 35°.

3. The pumping device (1, 200) according to any one of claims 1 and 2, wherein the axial projection (42, 242) has a radial cross section of polygonal and, preferably, rectangular shape.

4. The pumping device (1, 200) according to any one of claims 1 to 3, wherein the rotor (10) includes the male member (32).

5. The pumping device (1, 200) according to any one of claims 1 to 4, wherein the base (36, 236) includes a transverse abutment wall (50) contiguous and perpendicular to the proximal bearing wall (66), and wherein the casing (74) is provided with a lateral transverse edge (82), the lateral transverse edge (82) forming a shoulder for the abutment wall (50) of the base, when the male member (32) is coupled to the female member (34).

6. The pumping device (1) according to any one of claims 1 to 5, wherein the base (36) includes an inclined wall (52) contiguous and axially aligned with the outer locking wall (62), said inclined wall (52) having a locking angle (θ) relative to a plane perpendicular to the proximal bearing wall (66); said inclined wall (52) allowing the tilting of a fastening member among the male member (32) and the female member (34) relative to the other fastening member.

7. The pumping device (1, 200) according to any one of claims 5 and 6, wherein the base (36) and the casing (74) have a cylindrical outer shape, and wherein the pumping device (1, 200) further includes a locking ring (76) capable of sliding between a locking position wherein the locking ring (76) is arranged on at least part of the base (36) and on at least part of the casing (74) and an unlocking position wherein the locking ring (76) is arranged only around the casing (74).

8. The pumping device (1, 200) according to claim 7, wherein the base (36) includes a groove (53) and wherein the male member (32) includes at least one seal (54) arranged in said groove (53), the locking ring (76) being disposed above the seal (54), when the locking ring (76) is in a locking position.

9. The pumping device (1, 200) according to any one of claims 7 and 8, wherein the casing (74) includes a groove (96) and wherein the female member (34) includes at least one seal (98) arranged in said groove (96), the locking ring (76) being disposed above the seal (98), when the locking ring (76) is in a locking position.

10. The pumping device (1, 200) according to any one of claims 7 to 9, wherein the base (36) includes a radial hole (46) and at least one indexing finger (48) fastened in said radial hole (46), and wherein an inner face of the locking ring (76) comprises a slot (100) suitable for receiving one end of the indexing finger (48), when the locking ring (76) is positioned in a locked position.

11. The pumping device (1) according to any one of claims 1 to 10, wherein said first face (58) includes a distal sliding wall (68) parallel to the outer locking wall (62), the distal sliding wall (68) being opposite to a part of the outer locking wall (62).

12. The pumping device (200) according to any one of claims 1 to 5 and 7 to 10, wherein the second face (56) of the axial projection includes at least a first wall (208) adjacent to the base (236), a second wall (210) arranged in the extension of the first wall (208) in the second direction (Y), the first wall (208) being parallel to the proximal bearing wall (66), the second wall (210) being perpendicular to the first wall (208), and wherein said outer locking wall (262) is disposed in the extension of the second wall (210) in the second direction (Y).

13. The pumping device (200) according to any one of claims 1 to 5, 7 to 10 and 12, wherein said outer locking wall (262) has a domed shape and wherein said at least one inner locking wall (290) has a hollow shape adapted to receive said outer locking wall (262).

14. The pumping device (200) according to any one of claims 1 to 5, 7 to 10, 12 and 13, wherein the axial recess (80) includes four inner sliding walls (86) disposed perpendicular to each other and four inner locking walls (290), each inner locking wall (290) being disposed in the extension of an inner sliding wall (86) in the second direction (Y).

15. The pumping device (200) according to any one of claims 1 to 5, 7 to 10, 12 to 14, wherein the first face (58) of the axial projection includes an indentation (206) disposed in the extension of the proximal bearing wall (66) in the second direction (Y), said indentation (206) being open on an end face (60) of the axial projection.

16. The pumping device (200) according to claim 5, wherein the base (236) includes a transverse wall (202) disposed in the extension of the second face (56) in the second direction Y; said transverse wall (202) being set back from a plane containing the transverse abutment wall (50) so as to generate a clearance (204) between said transverse wall (202) and the lateral transverse edge (82) of the casing when the male member (32) is engaged in the female member (34), said clearance (204) allowing the tilting of a fastening member among the male member (32) and the female member (34) relative to the other fastening member.
